# EUROPÄISCHE PATENTSCHRIFT

(11) **EP 0 412 605 B1**
(45) Veröffentlichungstag und Bekanntmachung des Hinweises auf die Patenterteilung: **02.03.1994**
(21) Anmeldenummer: 90202105.4
(22) Anmeldetag: 02.08.1990
(51) Int. Cl.: C22C 21/06, B62D 1/04

(54) **Lenkradskelett**
Steering wheel skeleton
Squelette de volant

(30) Priorität: 11.08.1989 DE 3926576
(43) Veröffentlichungstag der Anmeldung: 13.02.1991
(73) Patentinhaber: KOLBENSCHMIDT Aktiengesellschaft, D-74150 Neckarsulm (DE)
(72) Erfinder: Drefahl, Klaus, D-6450 Hanau am Main (DE)
(74) Vertreter: Rieger, Harald, Dr.

(56) Entgegenhaltungen:
- EP-A- 0 292 038
- DE-A- 3 827 794
- GB-A- 1 013 200
- US-A- 3 834 900

## Beschreibung

Die Erfindung betrifft ein Lenkradskelett, bei dem wenigstens Lenkradnabe und Lenkradspeichen einteilig aus einer Aluminiumlegierung des Typs AlMg durch Druckgießen hergestellt sind.

Moderne Kraftfahrzeuge besitzen infolge der vergleichsweise hohen aktiven Fahrsicherheit und des Fahrkomforts einen solchen Gesamtkomfort, daß bereits geringste Störungen im allgemeinen Schwingungspegel vom Fahrer des Kraftfahrzeugs als störend empfunden werden. Als eine solche Störquelle ist die Lenkungsunruhe anzusehen, die im Geschwindigkeitsbereich von 80 bis 130 km/h vom Fahrer des Kraftfahrzeugs als Drehschwingungen und Vertikalschwingungen am Lenkrad selbst wahrgenommen werden. Den durch statisch-dynamische Unwuchten der Räder und Schwingungen des Rades um die Hochachse verursachten Lenkraddrehschwingungen kann man durch ein hohes Trägheitsmoment des Lenkrades, d.h. eine große Schwungmasse, begegnen, während zur Beseitigung der durch Unwucht der Räder an der Hinterachse hervorgerufenen Vertikalschwingungen des Lenkrades eine geringe Lenkradmasse von Vorteil ist. Die Komplexität der Lenkungsunruhe erfordert vom Lenkradhersteller einen Kompromiß zwischen großem Trägheitsmoment einerseits und kleiner Lenkradmasse andererseits, wobei der Kompromiß fahrzeugspezifisch unterschiedlich sein kann, insbesondere jedoch eine Variation des Trägheitsmomentes bei kleinster Lenkradmasse anzustreben ist. Der Kompromiß darf jedoch nicht zu Lasten der Betriebs- und Unfallsicherheit gehen.

Zur Erzielung eines solches Kompromisses ist in der DE-37 17 002 A ein Lenkradskelett beschrieben, bei dem Lenkradnabe, Lenkradspeichen und der Umguß der Lenkradspeichen am Lenkradkranz einteilig aus Aluminiumlegierung druckgegossen sind und der Lenkradkranz aus einem metallischen Werkstoff besteht. Bei gleichen Lenkradabmessungen ist für das gewichtsoptimierte Druckgußteil eine durch Antimon oder Strontium veredelte und nach dem Gießen unter Vakuum wärmebehandelte Aluminiumlegierung des Typs AlSi7Mg, AlSi9Mg oder AlSi10Mg und der Lenkradkranz je nach gewünschtem Trägheitsmoment aus Stahl oder Aluminium bzw. Aluminiumlegierung als Voll- oder Hohlprofil ausgeführt. Dabei sind die Lenkradspeichen nach dem Prinzip des Trägers gleicher Biegefestigkeit ausgelegt und besitzen ein U-förmiges, lenksäulenseitig offenes Profil. Durch eine 0,5- bis 4-stündige Wärmebehandlung bei 475 bis 530°C, einer nachfolgenden Abschreckung und einem 2-bis 7-stündigen Anlassen bei Temperaturen von 100 bis 200°C wird eine hinreichend hohe Bruchdehnung erzielt.

Auf eine solche, mit einem besonderen Aufwand verbundene Wärmebehandlung kann jedoch verzichtet werden, ohne die für die Betriebs- und Unfallsicherheit wichtigsten mechanisch-technologischen Eigenschaften, wie Formstabilität unter statischer Beanspruchung, Dauerfestigkeit unter wechselnder Beanspruchung, ausreichend hohe Bruchdehnung bei entsprechendem Formänderungswiderstand unter Unfallbedingungen, zu beeinträchtigen, wenn das druckgegossene Lenkradskelett gemäß DE 38 27 794 A aus einer 1,5 bis < 2,5 Gew.-% Magnesium enthaltenden Aluminiumlegierung besteht, die ggf. noch 0,4 bis 0,6 Gew.-% Mangan, 0,4 bis 1 Gew.-% Eisen und 0,2 bis 0,4 Gew.-% Silizium enthält. Der Magnesiumgehalt soll 2,5 Gew.-% nicht übersteigen, weil dadurch die Bruchdehnung verringert wird. Andererseits geht ein niedriger Magnesiumgehalt zu Lasten der Festigkeitswerte und sollte daher nicht kleiner als 1,5 Gew.-% sein.

Die Forderung der Kraftfahrzeughersteller nach Optimierung des Kompromisses von ausreichend hoher Bruchdehnung bei gleichzeitig hohen Festigkeitswerten hat zu einem aus einer Aluminiumlegierung des Typs AlMg druckgegossenen Lenkradskelett geführt, das sich erfindungsgemäß aus
2,5 bis 3,5 Gew.-% Magnesium
0,10 bis 0,30 Gew.-% Silizium
0,40 bis 0,60 Gew.-% Eisen
0,25 bis 0,45 Gew.-% Mangan
0,015 bis 0,05 Gew.-% Kupfer
0,035 bis 0,085 Gew.-% Zink
Rest Aluminium
zusammensetzt.

Vorzugsweise besteht das Lenkradskelett aus einer druckgegossenen Aluminiumlegierung mit
2,60 Gew.-% Magnesium
0,20 Gew.-% Silizium
0,40 Gew.-% Eisen
0,35 Gew.-% Mangan
0,03 Gew.-% Kupfer
0,06 Gew.-% Zink
Rest Aluminium.

Im Rahmen der besonderen Ausgestaltung der Erfindung sind Lenkradnabe, Lenkradspeichen und der Lenkradkranz einteilig durch Druckgießen hergestellt. Im Übrigen ist das Lenkradskelett so gestaltet, daß es ein Bauelement gleicher Verformung bei Crashbeanspruchung darstellt.

In nachfolgenden Ausführungsbeispielen ist das erfindungsgemäße Lenkradskelett näher und beispielhaft erläutert.

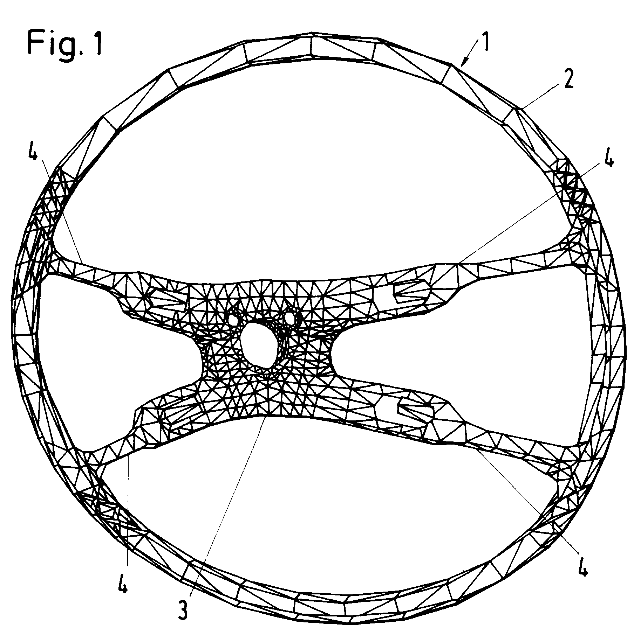

Das in Fig. 1 dargestellte nach dem Finite-Elemente-Methode mit räumlich gekrümmten Schalenelementen (826 Knoten/1446 Element) konstruierte Lenkradskelett wurde als Bauelement gleicher Verformung bei Crashbeanspruchung im üblichen Druckgrußverfahren aus der Aluminium-Magnesium-Legierung der Zusammensetzung
2,60 Gew.-% Magnesium
0,20 Gew.-% Silizium
0,44 Gew.-% Eisen
0,35 Gew.-% Mangan
0,03 Gew.-% Kupfer
0,06 Gew.-% Zink
so hergestellt, daß die gegen über dem Lenkradkranz ( 2 ) versenkte Lenkradnabe ( 3 ), die vier Lenkradspeichen ( 4 ) und der Lenkradkranz ( 2 ) einteilig miteinander verbunden sind. Das Lenkradskelett ( 1 ) wurde anschließend einer Dauerschwingprüfung unterzogen, wobei die senkrecht in der Mitte des oberen Segments des Lenkradkranzes ( 2 ) angreifende Kraft 2000 N betrug. Da das Lenkradskelett ( 1 ) entsprechend der vorgegebenen Spezifikation mehr als 100 000 Lastspiele ertrug, besaß es die von den Kraftfahrzeugherstellern geforderte Dauerfestigkeit.

Zur Feststellung der bruchfreien Dehnung bei einem Formänderungswiderstand von höchstens 11 111 N wurde auf das in gebrauchsüblicher Stellung montierte Lenkradskelett ( 1 ) eine antropometrische Puppe mit einer Geschwindigkeit von 24,1 ± 1,2 km/h geschossen. Die Anschlagpunkte lagen dabei jeweils in der senkrechten Mitte des kleinen bzw. großen Segments des Lenkradkranzes ( 2 ) sowie im Lenkradkranzbereich über einer Lenkradspeichenseite. Das Formänderungspotential dieses Lenkradskeletts ( 1 ) ist als optimal anzusehen, da der Lenkradkranz ( 2 ), die Lenkradspeichen ( 4 ) und die Lenkradnabe ( 3 ) nach dem Aufschlag nahezu eine Ebene bildeten.

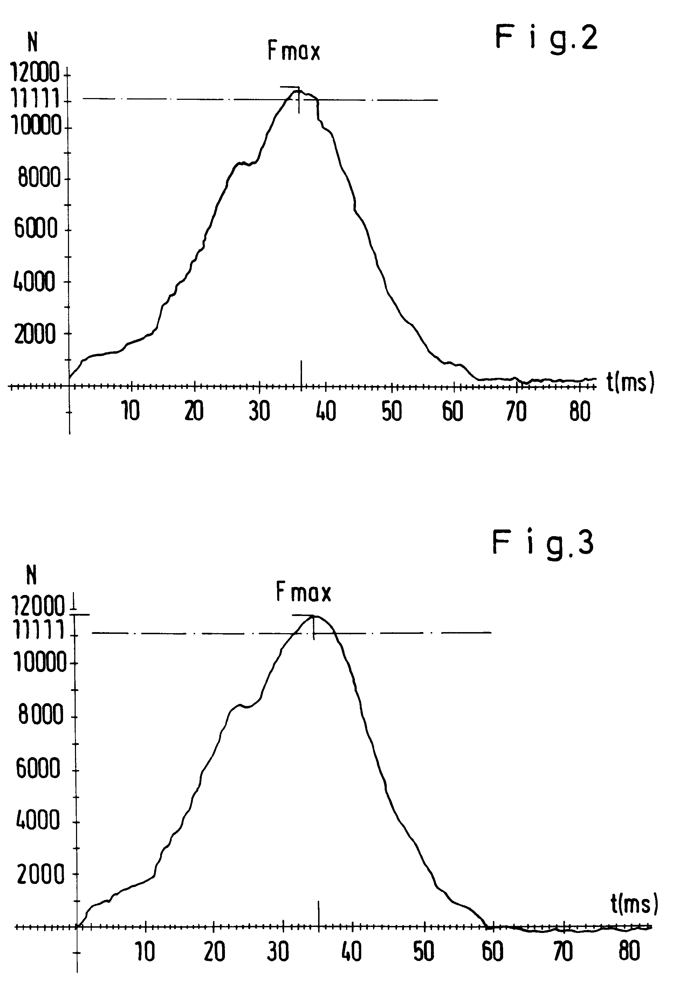

In Fig. 2 ist der typische Kurvenverlauf des Formänderungswiderstands des Lenkradskeletts bei einer schlagartigen Belastung der Lenkradspeiche ( 4 ) als Funktion der Zeit dargestellt, wobei spontane Lasteneinbrüche, die auf Brüche im Lenkrad hinweisen könnten, nicht zu erkennen sind. Bisher konnte ein solches Verhalten nur mit wärmebehandelten Lenkradskeletten erreicht werden. Der in Fig. 3 wiedergegebene Kurvenverlauf zeigt den Formänderungswiderstand in Abhängigkeit von der Zeit für eine Stunde lang bei 510 °C wärmebehandeltes Lenkradskelett; beide Kurvenzüge sind nahezu deckungsgleich. Damit ist im Sinne der Aufgabenstellung belegt, daß Lenkradskelette der erfindungsgemäßen Art auch im Gußzustand die an sie gestellten Anforderungen erfüllen können.
In beiden Fällen überragt das Maximum des Formänderungswiderstands (Fₘₐₓ) den vorgegebenen Wert von höchstens 11 111 N. Nach einer Ummantelung der Lenkradskeletts mit PU-Schaum liegt das Maximum des Formänderungswiderstands deutlich unter dem zulässigen Wert von 11 111 N.

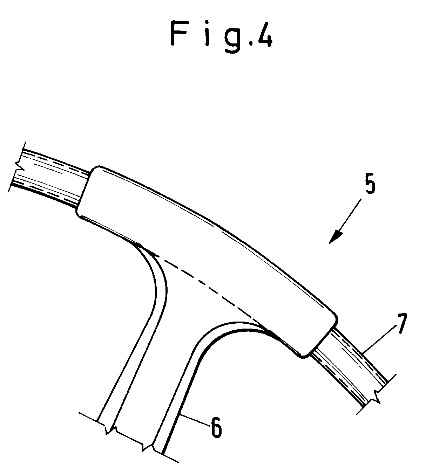

Fig. 4 zeigt als Ausschnitt ein Lenkradskelett ( 5 ), bei dem die nicht dargestellte Lenkradnabe und die Lenkradspeichen ( 6 ) einteilig druckgegossen sind und der aus einem Aluminiumrohr bestehende Lenkradkranz ( 7 ) von den Lenkradspeichen ( 6 ) umgossen ist.

## Patentansprüche

1. Lenkradskelett, bei dem wenigstens Lenkradnabe ( 3 ) und Lenkradspeichen ( 4 , 6 ) einteilig aus einer Aluminiumlegierung des Typs AlMg durch Druckgießen hergestellt und die Speichen um den Lenkradkranz ( 2 , 7 ) gegossen sind, bestehend aus
2,5 bis 3,5 Gew.-% Magnesium
0,10 bis 0,30 Gew.-% Silizium
0,40 bis 0,60 Gew.-% Eisen
0,25 bis 0,45 Gew.-% Mangan
0,015 bis 0,05 Gew.-% Kupfer
0,035 bis 0,085 Gew.-% Zink
Rest Aluminium.

2. Lenkradskelett nach Anspruch 1, bestehend aus
2,60 Gew.-% Magnesium
0,20 Gew.-% Silizium
0,40 Gew.-% Eisen
0,35 Gew.-% Mangan
0,03 Gew.-% Kupfer
0,06 Gew.-% Zink
Rest Aluminium.

3. Lenkradskelett nach den Ansprüchen 1 und 2 dadurch gekennzeichnet, daß Lenkradnabe ( 3 ), Lenkradspeichen ( 4 ) und Lenkradkranz ( 2 ) einteilig gegossen sind.

4. Lenkradskelett nach den Ansprüchen 1 bis 3 dadurch gekennzeichnet, daß es als Bauteil gleicher Verformung bei Crashbeanspruchung ausgebildet ist.

## Claims

1. A steering-wheel skeleton, in which at least the steering-wheel hub (3) and the steering-wheel spokes (4, 6) are produced integrally from an aluminium alloy of the type AlMg by pressure die-casting, and the spokes are cast around the steering-wheel rim (2, 7), consisting of
2.5 to 3.5 % by weight magnesium
0.10 to 0.30 % by weight silicon
0.40 to 0.60 % by weight iron
0.25 to 0.45 % by weight manganese
0.015 to 0.05 % by weight copper
0.035 to 0.085 % by weight zinc
remainder aluminium.

2. A steering-wheel skeleton according to Claim 1, consisting of
2.60 % by weight magnesium
0.20 % by weight silicon
0.40 % by weight iron
0.35 % by weight manganese
0.03 % by weight copper
0.06 % by weight zinc
remainder aluminium.

3. A steering-wheel skeleton according to Claims 1 and 2, characterised in that the steering-wheel hub (3), steering-wheel spokes (4) and steering-wheel rim (2) are cast integrally.

4. A steering-wheel skeleton according to Claims 1 to 3, characterised in that it is designed as a structural element of uniform deformation under crash loading.

## Revendications

1. Squelette de volant, dans lequel au moins le moyeu (3) du volant et les rayons (4,6) du volant sont réalisés d'un seul tenant en un alliage d'aluminium du type AlMg par coulée sous pression et les rayons sont coulés autour de la couronne (2,7) du volant, et qui est constitué par
2,5 à 3,5 % en poids de magnésium
0,10 à 0,30 % en poids de silicium
0,40 à 0,60 % en poids de fer
0,25 à 0,45 % en poids de manganèse
0,015 à 0,05 % en poids de cuivre
0,035 à 0,085 % en poids de zinc
le reste étant formé d'aluminium.

2. Squelette de volant suivant la revendication 1, constitué par
2,60 % en poids de magnésium
0,20 % en poids de silicium
0,40 % en poids de fer
0,35 % en poids de manganèse
0,03 % en poids de cuivre
0,06 % en poids de zinc
le reste étant formé d'aluminium.

3. Squelette de volant suivant les revendications 1 et 2, caractérisé par le fait que le moyeu (3), les rayons (4) et la couronne (2) du volant sont coulés d'un seul tenant.

4. Squelette de volant suivant les revendications 1 à 3, caractérisé par le fait qu'il est réalisé sous la forme d'un composant présentant une déformation uniforme dans le cas d'une contrainte due à une collision.
